(19) Europäisches Patentamt
European Patent Office
Office européen des brevets

(11) EP 3 165 559 A1

(12) DEMANDE DE BREVET EUROPEEN

(43) Date de publication:
**10.05.2017 Bulletin 2017/19**

(21) Numéro de dépôt: **16197153.6**

(22) Date de dépôt: **03.11.2016**

(51) Int Cl.:
***C08J 3/11*** (2006.01)
***B01J 13/00*** (2006.01)
***C08K 3/34*** (2006.01)
***H01B 1/12*** (2006.01)
***H01M 8/1072*** (2016.01)
***H01M 10/0565*** (2010.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **05.11.2015 FR 1560622**

(71) Demandeurs:
- **HUTCHINSON**
**75008 Paris (FR)**
- **CENTRE NATIONAL DE LA RECHERCHE SCIENTIFIQUE**
**75016 Paris (FR)**
- **UNIVERSITE DE NANTES**
**44000 Nantes (FR)**

(72) Inventeurs:
- **AYME-PERROT, David**
**68330 Huningue (FR)**
- **SONNTAG, Philippe**
**77210 AVON (FR)**
- **GIRARD, Philippe-Franck**
**78117 CHATEAUFORT EN YVELINES (FR)**
- **CERCLIER, Carole**
**44119 GRANDCHAMP DES FONTAINES (FR)**
- **LE BIDEAU, Jean**
**44300 NANTES (FR)**
- **BROUSSE, Thierry**
**44240 LA CHAPELLE SUR ERDRE (FR)**

(74) Mandataire: **Cabinet Plasseraud**
**66 rue de la Chaussée d'Antin**
**75440 Paris Cedex 09 (FR)**

# (54) IONOGEL FORMANT UN FILM AUTOSUPPORTE D'ELECTROLYTE SOLIDE, DISPOSITIF ELECTROCHIMIQUE L'INCORPORANT ET PROCEDE DE FABRICATION DE L'IONOGEL

(57) L'inventïon concerne un ionogel utilisable pour constituer un film autosupporté formant un électrolyte solide d'un dispositif électrochimique, un tel dispositif incorporant cet ionogel et un procédé de fabrication de cet ionogel. L'invention s'applique de manière générale à tous dispositifs de stockage d'énergie tels que des supercondensateurs ou des batteries d'accumulateurs (e.g. lithium-ion).

Un ionogel selon invention comprend :
- une matrice de confinement polymérique qui comprend au moins un acide polylactique, et
- au moins un liquide ionique confiné dans cette matrice.

Selon l'invention, cette matrice comprend en outre un polycondensat d'au moins un précurseur moléculaire sol-gel à groupe(s) hydrolysable(s).

Fig.7

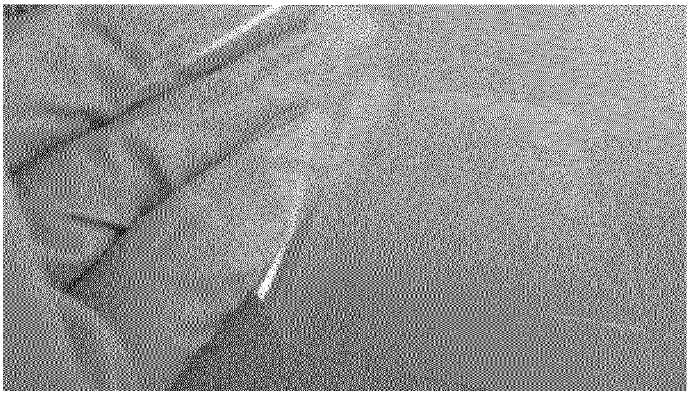

EP 3 165 559 A1

## Description

La présente invention concerne un ionogel utilisable pour constituer un film autosupporté formant un électrolyte solide d'un dispositif électrochimique, un tel dispositif incorporant cet ionogel et un procédé de fabrication de cet ionogel. L'invention s'applique de manière générale à tous dispositifs de stockage d'énergie tels que des supercondensateurs ou des batteries d'accumulateurs (e.g. lithium-ion), à titre exemplatif et nullement limitatif.

Il est connu de longue date de fabriquer des gels par un procédé sol-gel d'hydrolyse et de condensation qui, à partir d'un précurseur moléculaire (appelé solution « vraie »), conduit à la formation d'une solution colloïdale (appelé « sol ») puis, par connexion des particules colloïdales, à la formation d'un squelette solide continu nommé gel.

D'autre part, les liquides ioniques sont formés par l'association de cations et d'anions et sont à l'état liquide à température proche de la température ambiante. Ils présentent des propriétés remarquables, telles qu'une volatilité nulle, une conductivité ionique élevée ainsi que des propriétés catalytiques.

Il est notamment connu de confiner un liquide ionique dans une matrice de confinement formant un squelette solide continu, pour obtenir un ionogel, i.e. un gel confinant un liquide ionique qui préserve sa conductivité ionique. Le liquide ionique ainsi confiné reste par définition contenu dans la matrice, sans en couler ni s'en évaporer.

De tels ionogels sont notamment présentés dans le document de Brevet WO-A1-2005/007746, qui enseigne de former un ionogel monolithique à matrice de confinement rigide de type minérale ou organominérale (i.e. essentiellement inorganique) par polycondensation d'un précurseur moléculaire sol-gel à groupe(s) hydrolysable(s), tel qu'un alkoxysilane, qui est préalablement mélangé au liquide ionique et qui forme cette matrice de confinement après polycondensation.

Le document de Brevet WO-A1-20101092258 enseigne de fabriquer une électrode composite pour batterie au lithium, par coulage d'un ionogel sur une électrode composite poreuse, formant simultanément l'électrode composite imprégnée d'électrolyte et l'électrolyte séparateur à matrice rigide également minérale ou organominérale. Cet ionogel est obtenu par mélange d'un liquide ionique, d'un sel de lithium et de ce même précurseur sol-gel, tel qu'un alkoxysilane.

On a cherché plus récemment à fabriquer des ionogels formant des électrolytes solides de conductivité ionique élevée pour des batteries d'accumulateurs, en confinant un liquide ionique dans une matrice de confinement purement organique, en remplacement des matrices minérales ou organominérales de l'art antérieur. Le document CN-B-10 3254461 présente un tel ionogel à matrice de confinement organique constituée d'un mélange des stéréoisomères D et L d'un acide polylactique (« PLA » en abrégé pour « polylactic acid » en anglais).

L'acide polylactique est un polymère biosourcé fragile mécaniquement. Sa résistance mécanique diminue en outre au-delà de 45° C. En le plastifiant avec un liquide ionique, on sait que ses propriétés mécaniques et de conductivité ionique évoluent.

Cependant, un inconvénient majeur de ces ionogels connus à matrice de confinement constituée d'acide polylactique réside dans la tenue mécanique des films obtenus qui peut être insuffisante, voire totalement inadaptée en vue de leur utilisation comme électrolytes solides autosupporté, du fait d'une impossibilité pour les gels préparés d'être correctement mis en oeuvre sous forme de films, ou du fait que les films éventuellement obtenus ne peuvent pas être décollés de leur support d'enduction sans déformation ou arrachement, ou encore du fait d'une inaptitude de ces films à être enroulés autour d'un mandrin. En outre, certains liquides ioniques utilisables dans ce dernier document, tels que ceux à base de cations imidazolium associés à certain anions, peuvent dégrader les acides polylactiques qui les confinent.

Un but de la présente invention est de proposer un ionogel à matrice de confinement d'au moins un liquide ionique qui remédie notamment à ces inconvénients, et ce but est atteint en ce que la Demanderesse vient de découvrir d'une manière surprenante que si l'on utilise à titre de matrice de confinement d'un liquide ionique la combinaison d'un acide polylactique et d'un polycondensat d'un précurseur moléculaire sol-gel à groupe(s) hydrolysable(s), alors on peut obtenir un ionogel de tenue mécanique et de conductivité ionique nettement améliorées en comparaison de celles des deux ionogels précités respectivement à matrice résultant uniquement de la polycondensation d'un tel précurseur et uniquement formée d'acide polylactique, qui rend ces ionogels à matrice mixte parfaitement adaptés pour constituer à eux seuls un film autosupporté formant un électrolyte solide.

Un ionogel selon l'invention est ainsi utilisable pour constituer un film autosupporté formant un électrolyte solide d'un dispositif électrochimique, l'ionogel comprenant une matrice de confinement polymérique qui comprend au moins un acide polylactique et au moins un liquide ionique qui est confiné dans ladite matrice de confinement, et cet ionogel est tel que ladite matrice comprend en outre un polycondensat d'au moins un précurseur moléculaire sol-gel à groupe(s) hydrolysable(s).

L'expression "précurseur moléculaire" désigne ici le réactif contenant un des éléments de base de la matrice de l'ionogel qui sont entourés de ligands, et l'expression "groupement hydrolysable" désigne un groupement chimique lié à une entité moléculaire et pouvant être séparée de celle-ci par une hydrolyse.

On notera que cette combinaison inédite à ce jour, pour obtenir ladite matrice, de deux structures macromoléculaires très différentes qui sont respectivement essentiellement inorganique et organique, permet d'obtenir par effet de synergie des films monolithiques autosupportés (i.e. qui peuvent être décollés de leur support d'enduction sans

déformation ni arrachement même partiel des films en vue de leur enroulement sur un mandrin de diamètre réduit) qui présentent une tenue mécanique remarquable leur permettant d'être aisément manipulables et repositionnables dans de bonnes conditions, par rapport à la tenue mécanique des ionogels de l'art antérieur.

Comme cela sera expliqué ci-après, on notera également que la présence d'un réseau tridimensionnel polycondensé formé de la structure essentiellement inorganique dans la matrice de confinement permet d'améliorer encore la conductivité ionique des ionogels de l'invention, en comparaison d'un ionogel connu incorporant une fraction massique identique de liquide ionique confiné mais dont la matrice est exclusivement constituée d'un ou plusieurs acides polylactiques.

Selon une autre caractéristique de l'invention, ledit polycondensat formant ce réseau polycondensé essentiellement inorganique qui est de préférence de type silicique, peut avantageusement s'interpénétrer avec la structure organique comprenant ledit au moins un acide polylactique, pour former ladite matrice de confinement.

Avantageusement, un ionogel selon l'invention peut être caractérisé par un ratio massique [(acide(s) polylactique(s)) / polycondensat] compris entre 99/1 et 45/55, et encore plus avantageusement compris entre 80/20 et 55/45 (en d'autres termes, la fraction massique dudit polycondensat dans ladite matrice [(acide(s) polylactique(s))-polycondensat] selon l'invention peut varier de 1 % à 55 %).

De préférence, un ionogel selon l'invention comprend ledit au moins un acide polylactique selon une fraction massique qui est comprise entre 20 % et 70 %, et ledit polycondensat selon une fraction massique qui est comprise entre 1 % et 30 %.

A titre encore plus préférentiel, un ionogel selon l'invention comprend ledit au moins un acide polylactique selon une fraction massique qui est comprise entre 22 % et 50 %, et ledit polycondensat selon une fraction massique qui est comprise entre 8 % et 25 %.

Egalement à titre préférentiel, un ionogel selon l'invention comprend ledit liquide ionique selon une fraction massique qui est comprise entre 35 % et 75 %, et ladite matrice de confinement polymérique selon une fraction massique complémentaire qui est comprise entre 65 % et 25 %.

On notera que ces plages de ratios et de fractions massiques contribuent notamment à conférer aux ionogels selon l'invention une tenue mécanique satisfaisante et améliorée par rapport aux ionogels connus.

Selon une autre caractéristique de l'invention, ledit au moins un précurseur moléculaire sol-gel à groupe(s) hydrolysable(s) peut répondre à la formule générale $R'_x(RO)_{4-x}Si$, dans laquelle :

- x est un nombre entier variant de 0 à 4,
- R est un groupe alkyle de 1 à 4 atomes de carbone, et
- R' est un groupe alkyle de 1 à 4 atomes de carbone, un groupe aryle de 6 à 30 atomes de carbone, ou un atome d'halogène.

De préférence, ledit précurseur est choisi parmi les alkoxysilanes et les arylalkoxysilanes, étant précisé que d'autres précurseurs dérivés du silicium répondant à cette formule générale sont utilisables.

A titre encore plus préférentiel, le précurseur est choisi parmi :

- les alkoxysilanes bifonctionnels, ledit polycondensat pouvant comporter dans ce cas des chaînes linéaires ou des cycles comprenant des enchaînements de formule (R représentant un groupe alkyle) :

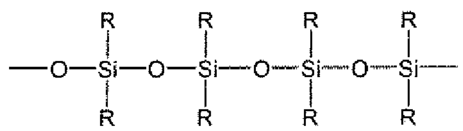

- les alkoxysilanes trifonctionnels, ledit polycondensat pouvant alors former un réseau tridimensionnel comprenant des enchaînements de formule (R représentant un groupe alkyle) :

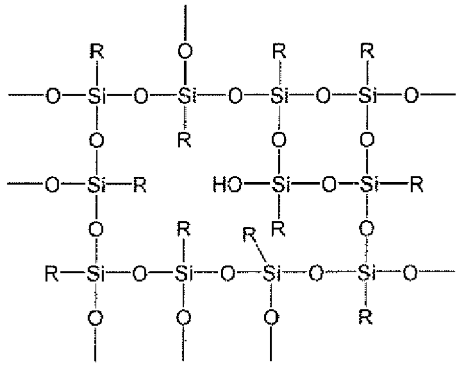

- les alkoxysilanes quadrifonctionnels, ledit polycondensat pouvant alors former un réseau tridimensionnel à enchaînements de formule :

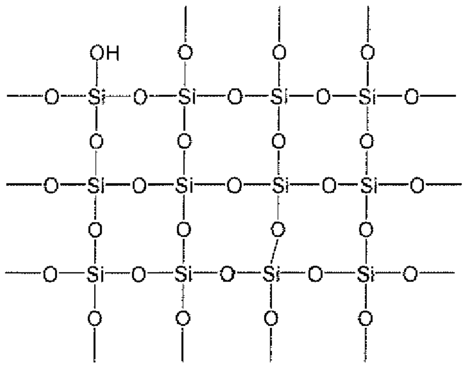

Ainsi, différents types de réseaux polycondensés peuvent être obtenus en fonction du type de précurseur utilisé.

Selon une autre caractéristique de l'invention, ledit au moins un acide polylactique (de formule $(C_3H_4O_2)_n$) peut avantageusement être amorphe et présenter une masse moléculaire moyenne en poids Mw supérieure à 100 kDa, de préférence égale ou supérieure à 120 kDa et, à titre encore plus préférentiel, égale ou supérieure à 130 kDa.

On notera que ledit au moins un acide lactique utilisable dans la matrice selon l'invention peut avoir une teneur variable en stéréoisomères D et L et que le degré de cristallinité obtenu dépend du ratio entre les acides D-polylactique et L-polylactique, étant précisé qu'une teneur élevée en acide D-polylactique est préférée vu qu'elle favorise l'amorphisation du copolymère.

De préférence, ledit au moins un liquide ionique comprend :

- un cation à noyau cyclique comprenant des atomes de carbone et au moins un atome d'azote choisi parmi les noyaux imidazolium, pyridinium, pyrrolidinium et pipéridinium, le noyau pouvant être substitué sur l'atome d'azote par un ou deux groupes alkyles de 1 à 8 atomes de carbone et sur les atomes de carbone par un ou plusieurs groupes alkyles de 1 à 30 atomes de carbone, et
- un anion choisi parmi les halogénures, les dérivés perfluorés, les borates, les dicyanamides, les phosphonates et les bis(trifluorométhanesulfonyl)imides.

On notera également que ledit au moins un liquide ionique est de préférence de type hydrophobe (l'acide polylactique s'hydrolysant en présence d'eau), et qu'un sel de lithium peut également être ajouté audit au moins un liquide ionique pour que l'ionogel selon l'invention puisse former un électrolyte de batterie lithium-ion.

Selon une autre caractéristique de l'invention, un ionogel formant ledit film autosupporté selon l'invention présente avantageusement une épaisseur moyenne égale ou supérieure à 10 $\mu$m et de préférence comprise entre 30 $\mu$m et 70 $\mu$m.

Avantageusement, les ionogels selon l'invention peuvent présenter une conductivité ionique à 22° C supérieure à $3.10^{-6}$ $S.cm^{-1}$, de préférence supérieure à $10^{-3}$ $S.cm^{-1}$ et par exemple variant de 3.2 $10^{-6}$ $S.cm^{-1}$ à 1.9 $10^{-3}$ $S.cm^{-1}$ en fonction de la composition des ionogels obtenus.

Comme indiqué ci-dessus, on notera que la conductivité ionique mesurée pour les ionogels de l'invention est non seulement d'autant plus haute que la fraction massique de liquide ionique incorporé dans l'ionogel est plus élevée, mais encore qu'elle augmente avec la présence dans la matrice dudit polycondensat combiné à l'acide polylactique

pour une même fraction massique donnée de liquide ionique.

Un dispositif électrochimique selon l'invention, tel qu'un supercondensateur ou une batterie lithium-ion et comprenant un électrolyte solide sous forme d'un film autosupporté (i.e. formant une membrane séparatrice), est caractérisé en ce que ledit électrolyte solide est constitué d'un ionogel tel que défini ci-dessus en relation avec l'invention.

Un procédé de fabrication selon l'invention d'un ionogel tel que défini ci-dessus comprend les étapes suivantes :

a) préparation d'une solution homogène non gélifiée précurseur de l'ionogel, par une réaction de polycondensation dudit au moins un précurseur moléculaire sol-gel à groupe(s) hydrolysable(s) en présence dudit au moins un acide polylactique et dudit au moins un liquide ionique ; et
b) mise en oeuvre sous forme de film gélifié de la solution obtenue en a) successivement par enduction de la solution sur un support, gélification de la solution enduite, séchage de la solution gélifiée, puis décollage de la solution gélifiée et séchée pour obtenir le film autosupporté.

On notera que la composition massique de l'ionogel finalement obtenu dépend des quantités de liquide ionique, d'acide polylactique et de précurseur utilisées à l'étape a).

Selon une autre caractéristique de l'invention, l'on peut mettre en oeuvre l'étape a) par les sous-étapes successives suivantes:

a1) solubilisation dudit au moins un acide polylactique dans un solvant organique,
a2) ajout dudit au moins un liquide ionique et dudit précurseur moléculaire sol-gel à groupe(s) hydrolysable(s),
a3) homogénéisation du milieu réactionnel obtenu par agitation, puis
a4) ajout d'un acide carboxylique (e.g. de l'acide formique de formule HCOOH) en excès, selon un rapport molaire [acide carboxylique / précurseur moléculaire] de préférence égal ou supérieur à 2, pour déclencher ladite réaction de polycondensation, après quoi la solution obtenue est mise sous agitation pendant une à deux minutes.

Quant à la réaction de polycondensation du réseau polycondensé mise en oeuvre en a4), elle peut être décrite par le mécanisme réactionnel suivant présenté à titre exemplatif dans le cas particulier d'un précurseur quadrifonctionnel de formule Si-(O-R)$_4$, où R est un groupe alkyle :

Carboxylation :

$$HCOOH + Si\text{-}(O\text{-}R)_4 \Leftrightarrow (R\text{-}O)_3Si\text{-}OOCH + R\text{-}OH \qquad (1)$$

$$HCOOH + Si\text{-}OH \Leftrightarrow Si\text{-}OOCH + H_2O \qquad (2)$$

Estérification :

$$R\text{-}OH + HCOOH \Leftrightarrow R\text{-}OOCH + H_20 \qquad (3)$$

Hydrolyse :

$$Si\text{-}O\text{-}R + H_20 \overset{H^+}{\Leftrightarrow} Si\text{-}OH + R\text{-}OH \qquad (4)$$

$$Si\text{-}OOCH + H_20 \overset{H+}{\Leftrightarrow} HCOOH + Si\text{-}OH \qquad (2^{-1})$$

Condensation:

$$2Si\text{-}OH \rightarrow Si\text{-}O\text{-}Si + H_20 \qquad (5)$$

$$Si\text{-}OH + Si\text{-}O\text{-}R \rightarrow Si\text{-}O\text{-}Si + R\text{-}OH \qquad (6)$$

$$Si\text{-}OH + Si\text{-}OOCH \rightarrow Si\text{-}O\text{-}Si + HCOOH \qquad (7)$$

$$Si\text{-}OOCH + Si\text{-}O\text{-}R \rightarrow Si\text{-}O\text{-}Si + R\text{-}OOCH \qquad (8)$$

$$\text{Si-O-R} + \text{HCOOH} \rightarrow \text{Si-OH} + \text{R-OOCH} \quad (9)$$

Avantageusement, l'étape b) précitée peut être mise en oeuvre directement après homogénéisation de la solution obtenue en a), par enduction sur ledit support qui est par exemple à base d'un polyester tel qu'un polyéthylène naphtalate (PEN), à l'aide d'un système d'enduction (e.g. de type lame de racloir ou barrette d'enduction respectivement pour « doctor blade » et « bar coater » en anglais). La gélification peut avoir lieu à température ambiante (22-25° C), et son séchage à l'air et/ou en étuve pour évaporer le solvant utilisé en a), étant précisé que le passage en étuve améliore significativement la transparence du film.

On notera que les ionogels de l'invention ne sont pas des gels chimiques, vu qu'il n'y a pas de structure tridimensionnelle covalente des chaînes d'acide(s) polylactique(s) et que le réseau formé par ledit polycondensat n'est pas toujours continu.

D'autres caractéristiques, avantages et détails de la présente invention ressortiront à la lecture de la description suivante de plusieurs exemples de réalisation de l'invention, donnés à titre illustratif et non limitatif et réalisés en relation avec les dessins joints, parmi lesquels :

La figure 1 est un graphique montrant l'évolution en fonction de la température de la conductivité ionique de quatre ionogels selon l'invention présentant différents ratios massiques acide polylactique/ polycondensat, la fraction massique du liquide ionique étant fixée à 50 %,

La figure 2 est un graphique montrant l'évolution en fonction du nombre de cycles de la capacité en charge (C), en décharge (D) et de l'efficacité coulombique (E) d'un supercondensateur incorporant un électrolyte selon l'invention qui présente une fraction massique de ce liquide ionique de 60%,

La figure 3 est un graphique montrant l'évolution en fonction du nombre de cycles et du temps de la capacité en charge (C), décharge (D) et de l'efficacité coulombique (E) d'un supercondensateur incorporant un autre électrolyte de l'invention avec une fraction massique du liquide ionique de 40%,

La figure 4 est un graphique montrant l'évolution en fonction du nombre de cycles de la capacité de quatre supercondensateurs incorporant quatre électrolytes dont trois selon l'invention et un non conforme à l'invention, en cyclage galvanostatique entre 0 et 2,7 V (0,5 A/g), la fraction massique en liquide ionique étant fixée à 50 % pour ces quatre électrolytes,

La figure 5 est un graphique montrant l'évolution en fonction du nombre de cycles de la résistance interne des quatre supercondensateurs de la figure 4, en cyclage galvanostatique entre 0 et 2,7 V (0,5 A/g),

La figure 6 est un diagramme ternaire illustrant la tenue mécanique de films en fonction des fractions massiques respectives d'acide polylactique, de polycondensat et de liquide ionique dans les ionogels,

La figure 7 est une photographie d'un film constitué d'un ionogel selon l'invention dont la matrice de confinement comprend à la fois un acide polylactique et un polycondensat essentiellement inorganique,

La figure 8 est une photographie d'un film « témoin » constitué d'un ionogel selon l'art antérieur dont la matrice de confinement est exclusivement constituée d'acide polylactique, et

La figure 9 est un diagramme ternaire montrant l'évolution de la conductivité ionique à 22° C de la plupart des films de la figure 6 montrant l'influence de la fraction massique du polycondensat dans ces ionogels.

On a évalué de manière qualitative la tenue mécanique des films obtenus en analysant principalement leur capacité à se décoller aisément de leur support d'enduction sans déformation ni arrachement même partiel des films, et à s'enrouler autour d'un mandrin de 5 mm de diamètre.

On a déterminé les conductivités ioniques des ionogels testés à 22° C à partir de mesures réalisées par spectroscopie d'impédance complexe (à l'aide d'un potentiostat VMP3 de BioLogic Science Instruments).

On a utilisé dans les exemples les abréviations suivantes :

- PLA : acide polylactique ; $SiO_2$ : polycondensat silicique.
- EMimTFSI: liquide ionique répondant au nom éthylméthylimidazolium bis(trifluoromethane sulfonyl)imide.
- TEOS : précurseur de silice formé de tétraéthoxysilane.
- [PLA/$SiO_2$]/EMimTFSI : [ratio massique entre la structure formée par le PLA et le réseau de $SiO_2$ dans la matrice de confinement] et fraction massique de ce liquide ionique dans l'ionogel.

**<u>Exemple 1 de fabrication d'un film d'ionogel selon l'invention en comparaison de deux films « témoin » incorporant des PLA non conformes à l'invention</u> :**

On a mélangé 380 mg de PLA à 2,2 mL de solvant afin d'obtenir une concentration de PLA de l'ordre de 175

g/L. On a mis la solution sous agitation jusqu'à la complète dissolution du polymère soit environ 2 h.

On y a ensuite ajouté 340 mg de liquide ionique (EMimTFSI) et 473 µL de précurseur de silice (TEOS) afin de former un ionogel [PLA/$SiO_2$]/EMimTFSI de composition massique [75/25]/40.

On a laissé la solution s'homogénéiser par agitation magnétique pendant 10 minutes. On a ajouté un excès d'acide formique (643 µL d'AF en abrégé) de sorte que l'on ait un rapport molaire r= (nombre de moles AF) / (nombre de moles TEOS) ≥ 8. On a mis la solution sous agitation pendant 1 à 2 minutes.

Puis on a réalisé son enduction sur un support en PEN préalablement nettoyé à l'acétone. On a fixé la vitesse d'enduction à 5 $cm.s^{-1}$, et la hauteur du dépôt était de 300 µm. On a laissé le film gélifier et sécher à l'air pendant 24 h, puis on l'a chauffé à 110° C pendant 1 h. On a enfin laissé ce film au repos pendant au moins 48 h avant utilisation.

Comme décrit dans le tableau 1 suivant, on a vérifié que les propriétés du PLA utilisé influencent fortement les propriétés finales du film d'ionogel obtenu. En effet, il en ressort que seul un PLA de masse moléculaire suffisamment élevée (Mw > 100 kDa, égale à 130 kDa dans l'exemple selon l'invention du Cas 1 ci-dessous) a permis de mettre en oeuvre le film dans de bonnes conditions en lui conférant en outre une tenue mécanique satisfaisante, mesurée qualitativement comme expliqué ci-dessus. On voit en particulier que les PLA de Mw inférieure ou égale à 100 kDa des Cas 2 et 3 ne permettaient pas de conférer à la fois aux films d'ionogels une aptitude à la mise en oeuvre et une tenue mécanique suffisantes.

Tableau 1 :

| | **Cas 1** | **Cas 2** | **Cas 3** |
|---|---|---|---|
| **Référence du PLA** | 4060HMw-HD | 6201HMw-LD | 4060LMw-HD |
| **Fabricant** | Grade commercial Natureworks | Grade commercial Natureworks | Grade expérimental Total Feluy |
| **Masse moléculaire Mw** | 130 **kDa** | 100 kDa | 17 kDa |
| **Microstructure** | Amorphe | Semi-cristallin | Amorphe |
| **Solvant utilisé** | Acétonitrile | Dichlorométhane | Acétonitrile |
| **Mise en oeuvre du film** | Bonne | Mauvaise (solvant trop volatil) | Bonne |
| **Tenue mécanique du film** | Bonne | Non applicable | Insuffisante (déchirement) |

**Exemples 2 « témoin » de fabrication de deux films d'ionogels présentant respectivement deux fractions massiques de liquide ionique non conformes à l'invention :**

**a)** Premier exemple « témoin » de fabrication d'un ionogel de composition [PLA/$SiO_2$]/EMIMTFSI = [75/251/90 :

On a mélangé 92 mg de PLA (PLA4060 HMw-HD de Natureworks de masse Mw = 130 kDa) à 0,5 mL d'acétonitrile afin d'obtenir une concentration de PLA de l'ordre de 180 g/L. On a mis la solution sous agitation jusqu'à la complète dissolution du polymère, pendant environ 2 h. On a ensuite ajouté 937 mg de EMimTFSI et 110 µL de TEOS. On a laissé la solution s'homogénéiser par agitation magnétique pendant 10 minutes, puis on a ajouté 150 µL d'acide formique de sorte que l'on ait un rapport molaire r= (AF)/(TEOS) ≥ 8. On a mis la solution sous agitation pendant 1 à 2 minutes.

Puis on a réalisé son enduction sur un support en PEN préalablement nettoyé à l'acétone. On a fixé la vitesse d'enduction à 5 $cm.s^{-1}$, et la hauteur du dépôt était de 300 µm. On a laissé le film gélifier et sécher à l'air pendant 24 h, puis on l'a chauffé à 110° C pendant 1 h. On a enfin laissé ce film au repos pendant au moins 48 h avant utilisation. L'ionogel obtenu non conforme à l'invention présentait une fraction massique en liquide ionique nettement supérieure à 75 %, qui faisait que cet ionogel présentait la texture d'une pâte dont la mise en oeuvre sous forme de film n'était pas réalisable.

**b)** Second exemple « témoin » de fabrication d'un ionogel de composition [PLA/$SiO_2$]/EMIMTFSI = [75/25]/30 :

On a mélangé 387 mg de PLA (même PLA4060 HMw-HD de Natureworks de masse Mw = 130 kDa) à 0,5 mL d'acétonitrile afin d'obtenir une concentration de PLA de l'ordre de 180 g/L. On a mis la solution sous agitation jusqu'à la complète dissolution du polymère, pendant environ 2 h. On a ensuite ajouté 227 mg de EMimTFSI et 476 µL de

TEOS. On a laissé la solution s'homogénéiser par agitation magnétique pendant 10 minutes, puis on a ajouté 648 μL d'acide formique de sorte que l'on ait un rapport molaire r= (AF) / (TEOS) ≥ 8. On a mis la solution sous agitation pendant 1 à 2 minutes.

Puis on a réalisé son enduction sur un support en PEN préalablement nettoyé à l'acétone. On a fixé la vitesse d'enduction à 5 $cm.s^{-1}$, et la hauteur du dépôt était de 300 μm. On a laissé le film gélifier et sécher à l'air pendant 24 h, puis on l'a chauffé à 110° C pendant 1 h. On a enfin laissé ce film au repos pendant au moins 48 h avant utilisation. L'ionogel obtenu présentait une fraction massique en liquide ionique de seulement 30 %, qui faisait que ce film adhérait très fortement au support : il se déformait et/ou s'arrachait lorsque l'on cherchait à le retirer de ce support.

**Exemple 3 de fabrication de quatre films d'ionogels selon l'invention présentant divers ratios massiques [PLA/$SiO_2$] pour une même fraction massique de liquide ionique de 50 %:**

On a comparé entre eux quatre ionogels contenant 50 % en masse de EMIMTFSI, mais avec quatre ratios différents [PLA/$SiO_2$], en comparaison d'un ionogel 1 « témoin » de composition [100/0]/50 caractérisé par l'absence de polycondensat silicique (voir figures 4-5). On a utilisé le PLA 4060 HMw-HD de Natureworks pour préparer chaque ionogel qui était caractérisé par la composition massique [PLAi$SiO_2$]/EMimTFSI, et préparé selon le protocole suivant :

- Ionogel 2 [75/25]/50 : on a mélangé environ 380 mg de PLA (Mw = 130 kDa) à 2,2 mL d'acétonitrile. On a mis la solution sous agitation pendant environ 2 h. On y a ensuite ajouté 507 mg de EMimTFSI et 462 μL de TEOS. On a laissé la solution s'homogénéiser par agitation magnétique pendant 10 minutes, puis on a ajouté 648 μL d'acide formique.
- Ionogel 3 [60/40]/50: on a mélangé environ 215 mg de PLA (Mw = 130 kDa) à 1,2 mL d'acétonitrile. On a mis la solution sous agitation pendant environ 2 h. On y a ensuite ajouté 364 mg de EMimTFSI et 530 μL de TEOS. On a laissé la solution s'homogénéiser par agitation magnétique pendant 10 minutes, puis on a ajouté 720 μL d'acide formique.
- Ionogel 4 [50/50]/50 : on a mélangé environ 217 mg de PLA (Mw = 130 kDa) à 1,2 mL d'acétonitrile. On a mis la solution sous agitation pendant environ 2 h. On y a ensuite ajouté 431 mg de EMimTFSI et 800 μL de TEOS. On a laissé la solution s'homogénéiser par agitation magnétique pendant 10 minutes, puis on a ajouté 1090 μL d'acide formique.
- Ionogel 5 [45/55]/50 : on a mélangé environ 295 mg de PLA (Mw = 130 kDa) à 1,6 mL d'acétonitrile. On a mis la solution sous agitation pendant environ 2 h. On y a ensuite ajouté 655 mg de EMimTFSI et 1,33 mL de TEOS. On a laissé la solution s'homogénéiser pendant 10 minutes, puis on a ajouté 1,81 mL d'acide formique.

On a mis chaque solution sous agitation magnétique pendant 1 à 2 minutes directement avant enduction sur un support en PEN préalablement nettoyé à l'acétone. On a fixé la vitesse d'enduction à 5 $cm.s^{-1}$, et la hauteur du dépôt était de 300 μm. On a laissé chaque film gélifier et sécher à l'air pendant 24 h, puis on l'a chauffé à 110° C pendant 1 h. On a enfin laissé chaque film au repos pendant au moins 48 h avant utilisation.

On a procédé à des mesures de conductivité ionique en faisant varier la température pour une série d'échantillons dont la teneur en liquide ionique était fixée à 50 % en masse. Comme illustré à la figure 1 pour l'ensemble des quatre films 2, 3, 4, 5 selon l'invention, la conductivité ionique était de l'ordre de 0,1 $mS.cm^{-1}$ à une température de l'ordre de 20 à 22° C et atteignait 1 $mS.cm^{-1}$ à plus haute température.

**Exemple 4 d'essais dans des supercondensateurs de deux électrolytes de l'invention avec un même ratio massique [PLA/$SiO_2$] et deux fractions massiques différentes de liquide ionique (figures 2-3), et d'essais des trois films 2, 3, 4 formant des électrolytes de l'invention comparés au film d'électrolyte 1 « témoin » avec une même fraction massique de liquide ionique de 50 % pour ces électrolytes (Figures 4-5) :**

On a réalisé des dispositifs supercondensateurs à partir de montages de type « Swagelok ». On a imbibé de liquide ionique EMimTFSI une première électrode, qui était à base de carbone poreux et préalablement déposée sur un collecteur en aluminium.

On a déposé sur la première électrode, lors de deux premiers essais distincts, deux ionogels selon l'invention préparés selon le protocole du Cas 1 de l'exemple 1 et dont les compositions massiques respectives [PLA/$SiO_2$]/EMimTFSI étaient [75/25]/60 (voir figure 2) et [75/25]/40 (voir figure 3). On a imbibé du même liquide ionique une deuxième électrode et l'on a mis l'ensemble en contact, de sorte que chacun des deux ionogel obtenus sous forme de film mince formait un électrolyte solide autosupporté entre les deux électrodes.

On a réalisé les caractérisations électrochimiques à température ambiante à l'aide d'un potentiostat (VMP3, BioLogic Science Instruments). On a notamment déterminé les capacités par cyclage galvanostatique. On a fixé un courant I = 2 mA (soit une densité de courant de 0,5 A par gramme de carbone d'une électrode) pour lequel on a fait

varier le potentiel entre 0 et 2,7 V puis entre 2,7 V et 0 V, de manière à alterner les charges et décharges du système.

Comme visible aux figures 2-3 (qui illustrent les courbes de charge C, décharge D et d'efficacité coulombique E obtenues) et aux figures 4-5 (qui illustrent les performances des films d'électrolytes 1, 2, 3, 4), les valeurs de capacité obtenues pour les électrolytes solides 2, 3, 4 selon l'invention étaient de l'ordre de 20 F à 50 F par gramme de carbone d'une électrode. Ces dispositifs étaient capables de fonctionner en cyclage pendant au moins 10 000 cycles. On peut noter que les systèmes étaient plus stables avec 40 % en masse de liquide ionique (comme illustré à la figure 3) et en outre que les performances électrochimiques étaient améliorées en présence du polycondensat silicique combiné au PLA dans la matrice de confinement.

En conclusion, les résultats des figures 2-5 démontrent que ces dispositifs électrochimiques ont fonctionné efficacement, chaque film d'ionogel ayant bien rempli son rôle de membrane séparatrice au sein du dispositif correspondant.

**Exemple 5 de mesure de la tenue mécanique de films selon l'invention et « témoin » (figure 6), fabriqués selon le procédé de l'exemple 1 (Cas 1) ou de l'exemple 3 pour les films de l'invention, et selon ces procédés mais avec des compositions [PLA/$SiO_2$]/EMimTFSI non conformes à l'invention pour les films « témoin » :**

On a évalué la tenue mécanique des films d'ionogels obtenus, principalement au vu de leur capacité à se décoller aisément de leur support d'enduction en PEN et en outre à s'enrouler autour du mandrin de 5 mm de diamètre, via une évaluation qualitative par une note comprise entre 0 et 5.

La note 0 signifie que l'on n'a pas obtenu un film autosupporté par ce décollement, et la note 5 que l'on a non seulement obtenu un film autosupporté mais que ce film a été aisément enroulé autour dudit mandrin en ayant été facile à manipuler par un opérateur sans l'altérer en aucune manière. Quant aux notes 1-2 et 3-4, elles signifient respectivement que l'on n'a pas véritablement obtenu un film autosupporté suite au décollement (notes 1-2) et que le film autosupporté obtenu n'a pas été aisément enroulé autour du mandrin et/ou n'a pas été facile à manipuler sans l'altérer (notes 3-4).

La figure 6 présente les performances obtenues en fonction des trois fractions massiques respectives de PLA, de $SiO_2$ et de EMimTFSI des films d'ionogels testés selon l'invention et « témoin » incorporant le liquide ionique EMimTFSI pur.

Les notes 5 et 4 obtenues pour les films visibles à la figure 6 démontrent l'effet de synergie des structures respectivement organique (PLA) et essentiellement inorganique ($SiO_2$) pour l'obtention d'une tenue mécanique très nettement améliorée pour les films de l'invention, qui contenaient :

- entre 35 et 75 % en masse de liquide ionique et entre 65 et 25 % de matrice de confinement, elle-même caractérisée par un ratio massique [PLA/$SiO_2$] compris entre [99/1] et [45/55], et
- une fraction massique de PLA comprise entre 20 et 70 %, de préférence comprise entre 30 et 60%, et de polycondensat silicique comprise entre 1 et 30 %.

En particulier, la figure 6 montre que parmi les films testés selon l'invention ayant présenté les meilleures tenues mécaniques (note 5), se trouvaient des films incorporant le polycondensat silicique selon une fraction massique variant avantageusement de 10 à 23 %, voir les six carrés de note 5 caractérisés par les trois fractions massiques suivantes PLA/$SiO_2$/EMimTFSI (fractions exprimées en %) :

30/10/60, 38/12/50, 45/15/40, 23/17/60, 30/20/50, 37/23/40.

Le côté inférieur du triangle de la figure 6 (i.e. avec une fraction massique de polycondensat silicique dans les ionogels comprise entre 0 et 1 %) montre que sans le réseau silicique, les tenues mécaniques obtenues pour les films sont moins bonnes.

La figure 7 montre l'aspect satisfaisant d'un film autosupporté selon l'invention tel que testé à la figure 6, qui était caractérisé par les trois fractions massiques (en %) PLA/$SiO_2$/EMimTFSI de 38/12/50, la présence du polycondensat silicique rendant ce film autosupporté aisément manipulable et repositionnable en vue de son utilisation comme électrolyte solide d'un supercondensateur ou d'une batterie lithium-ion, notamment.

On voit par contraste que le film « témoin » de la figure 8 dont la matrice de confinement est exclusivement constituée d'acide polylactique, i.e. avec les fractions massiques (en %) PLA/$SiO_2$/EMimTFSI de 60/0/40 présente une texture ne le rendant pas à la fois autosupporté et apte à s'enrouler et à être manipulé et repositionné de manière satisfaisante.

La figure 9 montre que la conductivité ionique des films d'ionogels selon l'invention est d'autant plus haute que la fraction massique de liquide ionique est plus élevée dans ces films. Cependant et indépendamment de cette fraction massique, le diagramme de la figure 9 démontre également que la présence d'un polycondensat selon l'invention, de type silicique dans cet exemple de l'invention, permet d'obtenir des conductivités ioniques supérieures pour une fraction

massique donnée de liquide ionique confiné. En particulier, cette figure 9 montre que pour une fraction de liquide ionique dans un ionogel selon l'invention égale à 60 % ou à 70 %, c'est la plage de fractions massiques dudit polycondensat allant de 8 à 18 % (incluant les trois films de fractions massiques PLA/$SiO_2$/EMimTFSI de 22/8/70, 18/12/70 et 22/18/60) qui procure les conductivités ioniques les plus élevées, qui étaient supérieures à $5.10^{-3}$ $S.cm^{-1}$ (i.e. 5.0E-03 en abrégé à la figure 9) pour cette plage de fraction massique 8-18 % de polycondensat.

**Exemple comparatif 1**

On a fabriqué un ionogel selon le protocole 5 décrit dans la demande de brevet français FR 2 857 004 A.

Dans ce but, on a mélangé 1 mL d'$EtMeIm^+NTf_2^-$ (liquide ionique 1-éthyl-3-méthylimidazolium bis(trifluorosulfonyl)imide) (3,6 mmol), 2 mL d'acide formique (53 mmol) et 1 mL de tétraméthoxysilane (6,8 mmol).

Dans ce ionogel, les fractions massiques PLA/$SiO_2$/liquide ionique sont 0/22,5/77,5.

On a ensuite mis la solution d'ionogel homogénéisée sous agitation magnétique pendant une à deux minutes directement avant enduction sur un support en PEN préalablement nettoyé à l'acétone. On a fixé la vitesse d'enduction à 5 $cm.s^{-1}$, et la hauteur du dépôt est de 300 $\mu$m.

On a laissé ce dépôt au repos pendant 7 jours dans le but d'obtenir un film auto-supporté.

Au bout de 7 jours, le film obtenu ne pouvait pas être manipulé sans se rompre.

**Exemple comparatif 2**

On a fabriqué un ionogel en utilisant les mêmes composés dans les mêmes proportions qu'à l'exemple comparatif 1 mais une fois le ionogel enduit sur le support en PEN, on l'a laissé sécher 24 heures à l'air puis une heure à 10°C.

On l'a ensuite laissé au repos 48 heures.

Le film obtenu ne pouvait pas être manipulé sans se rompre.

Les exemples comparatifs 1 et 2 montrent que l'ajout de PLA est nécessaire pour obtenir un film auto-supporté ayant une bonne tenue mécanique.

## Revendications

1. Ionogel utilisable pour constituer un film autosupporté formant un électrolyte solide d'un dispositif électrochimique, l'ionogel comprenant :

   - une matrice de confinement polymérique qui comprend au moins un acide polylactique, et
   - au moins un liquide ionique confiné dans ladite matrice de confinement,

   **caractérisé en ce que** ladite matrice de confinement comprend en outre un polycondensat d'au moins un précurseur moléculaire sol-gel à groupe(s) hydrolysable(s).

2. Ionogel selon la revendication 1, **caractérisé en ce que** ledit polycondensat forme un réseau polycondensé essentiellement inorganique qui s'interpénètre optionnellement avec une structure organique comprenant ledit au moins un acide polylactique pour former ladite matrice.

3. Ionogel selon la revendication 2, **caractérisé en ce que** ledit réseau polycondensé essentiellement inorganique est silicique.

4. Ionogel selon une des revendications précédentes, **caractérisé par** un ratio massique [(ledit au moins un acide polylactique) / ledit polycondensat] compris entre 99/1 et 45/55.

5. Ionogel selon la revendication 4, **caractérisé en ce que** ledit ratio massique [(ledit au moins un acide polylactique) / ledit polycondensat] est compris entre 80/20 et 55/45.

6. Ionogel selon une des revendications précédentes, **caractérisé en ce que** l'ionogel comprend ledit au moins un acide polylactique et ledit polycondensat selon des fractions massiques respectivement comprises entre 20 % et 70 % et entre 1 % et 30 %.

7. Ionogel selon la revendication 6, **caractérisé en ce que** l'ionogel comprend ledit au moins un acide polylactique et ledit polycondensat selon des fractions massiques respectivement comprises entre 22 % et 50 % et entre 8 % et 25 %.

**8.** Ionogel selon une des revendications précédentes, **caractérisé en ce que** l'ionogel comprend ledit liquide ionique et ladite matrice de confinement polymérique selon des fractions massiques respectivement comprises entre 35 % et 75 % et entre 65 % et 25 %.

**9.** Ionogel selon une des revendications précédentes, **caractérisé en ce que** ledit au moins un précurseur moléculaire sol-gel à groupe(s) hydrolysable(s) répond à la formule générale $R'_x(RO)_{4-x}Si$, dans laquelle :

- x est un nombre entier variant de 0 à 4,
- R est un groupe alkyle de 1 à 4 atomes de carbone, et
- R' est un groupe alkyle de 1 à 4 atomes de carbone, un groupe aryle de 6 à 30 atomes de carbone, ou un atome d'halogène.

**10.** Ionogel selon la revendication 9, **caractérisé en ce que** ledit précurseur est choisi parmi les alkoxysilanes et les arylalkoxysilanes.

**11.** Ionogel selon la revendication 10, **caractérisé en ce que** ledit précurseur est choisi parmi :

- les alkoxysilanes bifonctionnels, ledit polycondensat comportant dans ce cas des chaînes linéaires ou des cycles comprenant des enchaînements de formule (R représentant un groupe alkyle) :

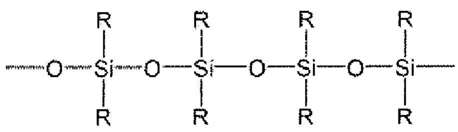

- les alkoxysilanes trifonctionnels, ledit polycondensat formant dans ce cas un réseau tridimensionnel comprenant des enchaînements de formule (R représentant un groupe alkyle) :

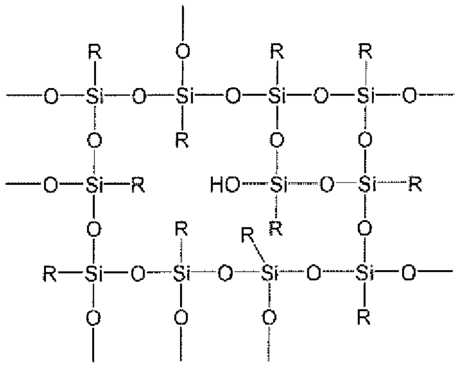

- les alkoxysilanes quadrifonctionnels, ledit polycondensat formant dans ce cas un réseau tridimensionnel comprenant des enchaînements de formule :

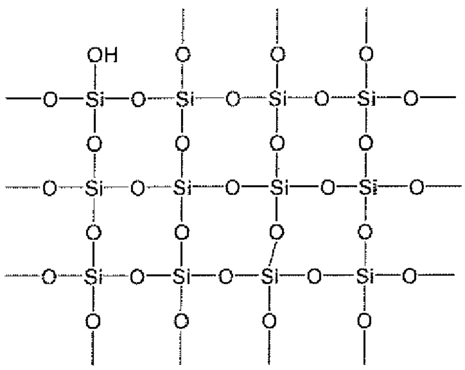

**12.** Ionogel selon une des revendications précédentes, **caractérisé en ce que** ledit au moins un acide polylactique est amorphe et présente une masse moléculaire moyenne en poids Mw supérieure à 100 kDa.

**13.** Ionogel selon une des revendications précédentes, **caractérisé en ce que** ledit au moins un liquide ionique comprend :

- un cation cyclique qui comprend au moins un atome d'azote et qui est choisi parmi les cations imidazolium, pyridinium, pyrrolidinium et pipéridinium, et
- un anion choisi parmi les halogénures, les dérivés perfluorés, les borates, les dicyanamides, les phosphonates et les bis(trifluorométhanesulfonyl)imides.

**14.** Ionogel selon une des revendications précédentes, **caractérisé en ce que** l'ionogel présente une épaisseur moyenne égale ou supérieure à 10 $\mu$m, de préférence comprise entre 30 $\mu$m et 70 $\mu$m.

**15.** Ionogel selon une des revendications précédentes, **caractérisé en ce que** l'ionogel présente une conductivité ionique à 22° C supérieure à $3.10^{-6}$ $S.cm^{-1}$, de préférence supérieure à $10^{-3}$ $S.cm^{-1}$.

**16.** Dispositif électrochimique tel qu'un supercondensateur ou une batterie lithium-ion et comprenant un électrolyte solide sous forme d'un film autosupporté de séparation, **caractérisé en ce que** ledit électrolyte solide est constitué d'un ionogel selon une des revendications précédentes.

**17.** Procédé de fabrication d'un ionogel selon une des revendications 1 à 15, **caractérisé en ce qu'**il comprend les étapes suivantes :

a) préparation d'une solution homogène non gélifiée précurseur de l'ionogel, par une réaction de polycondensation dudit au moins un précurseur moléculaire sol-gel à groupe(s) hydrolysable(s) en présence dudit au moins un acide polylactique et dudit au moins un liquide ionique ; et
b) mise en oeuvre de la solution obtenue à l'étape a) sous forme de film gélifié, successivement par :

- enduction de la solution sur un support,
- gélification de la solution enduite,
- séchage de la solution gélifiée, puis
- décollage de la solution enduite, gélifiée et séchée pour l'obtention dudit film autosupporté.

**18.** Procédé de fabrication d'un ionogel selon la revendication 17, **caractérisé en ce que** l'on met en oeuvre l'étape a) par les sous-étapes successives suivantes:

a1) solubilisation dudit au moins un acide polylactique dans un solvant organique,
a2) ajout dudit au moins un liquide ionique et dudit précurseur moléculaire sol-gel à groupe(s) hydrolysable(s),
a3) homogénéisation du milieu réactionnel obtenu par agitation, puis
a4) ajout d'un acide carboxylique en excès selon un rapport molaire [acide carboxylique / précurseur moléculaire] de préférence égal ou supérieur à 2, pour déclencher ladite réaction de polycondensation.

**Fig.1**

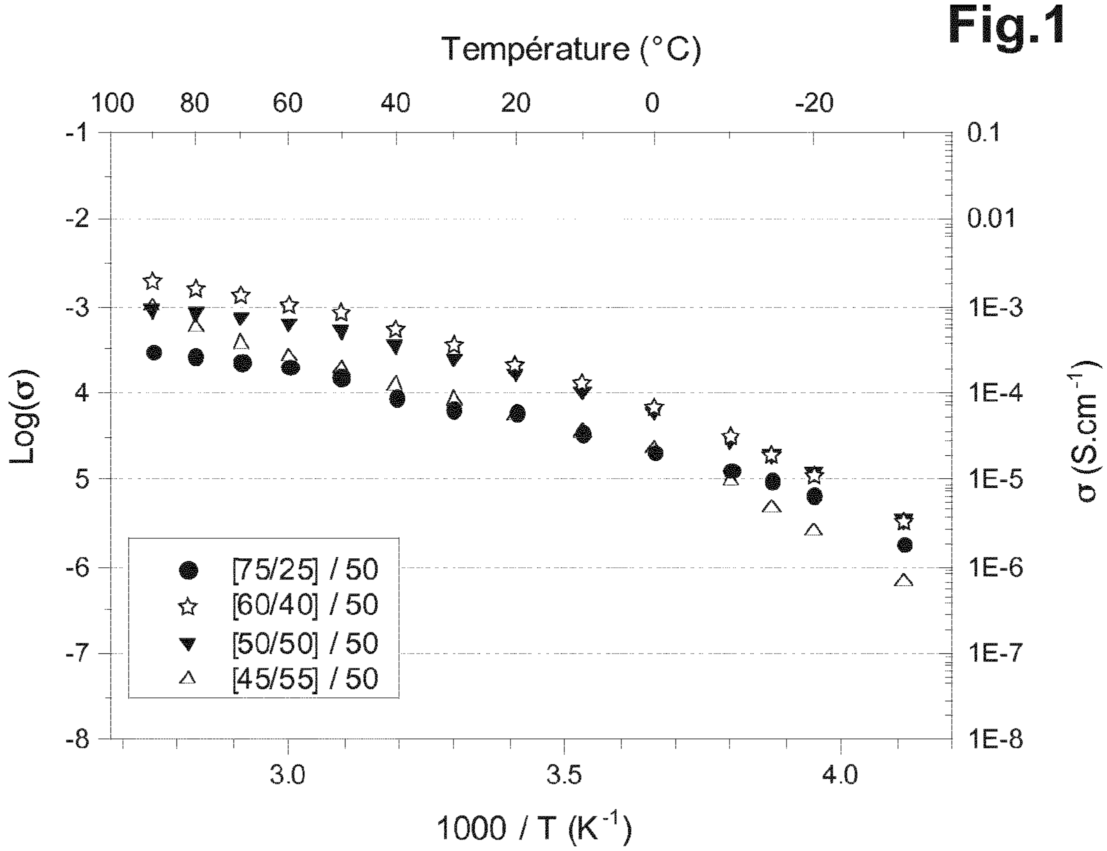
Température (°C)
100
80
60
40
20
0
-20
-1
-2
-3
4
5
-6
-7
-8
Log(σ)
0.1
0.01
1E-3
1E-4
1E-5
1E-6
1E-7
1E-8
σ (S.cm-1)
[75/25] / 50
[60/40] / 50
[50/50] / 50
[45/55] / 50
3.0
3.5
4.0
1000 / T (K-1)

**Fig.2**

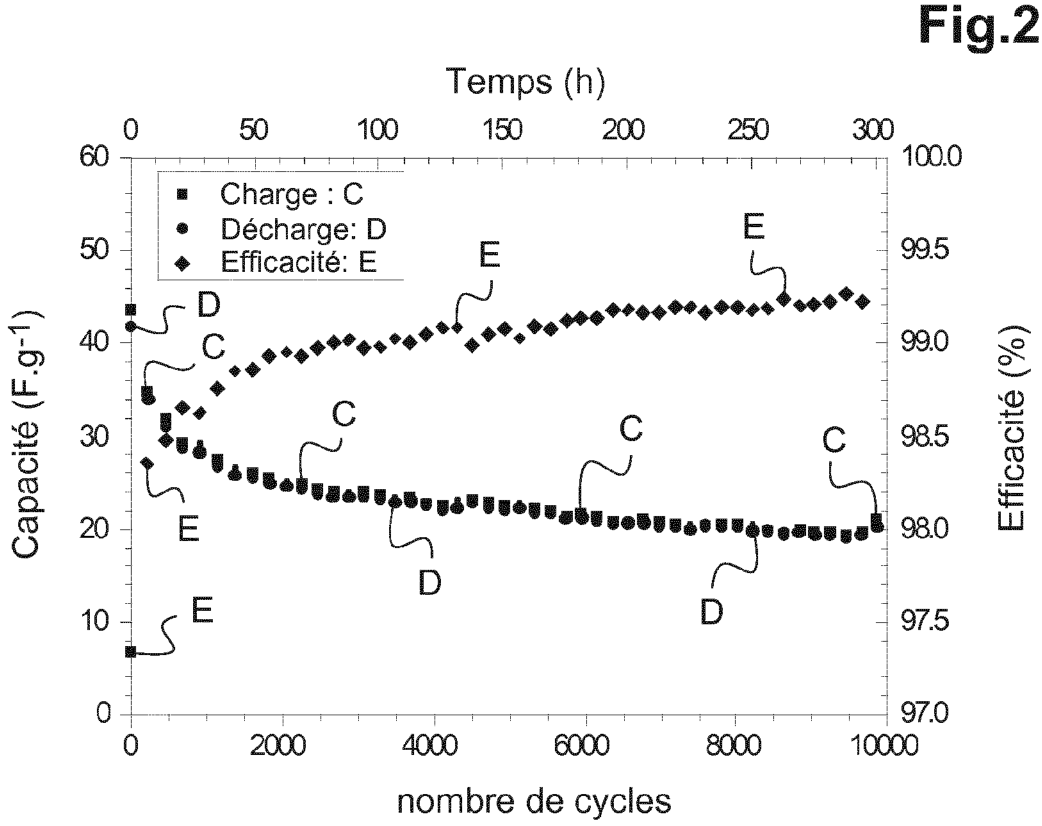
Temps (h)
0
50
100
150
200
250
300
Charge : C
Décharge: D
Efficacité: E
Capacité (F.g-1)
Efficacité (%)
60
50
40
30
20
10
0
100.0
99.5
99.0
98.5
98.0
97.5
97.0
2000
4000
6000
8000
10000
nombre de cycles

Fig.3

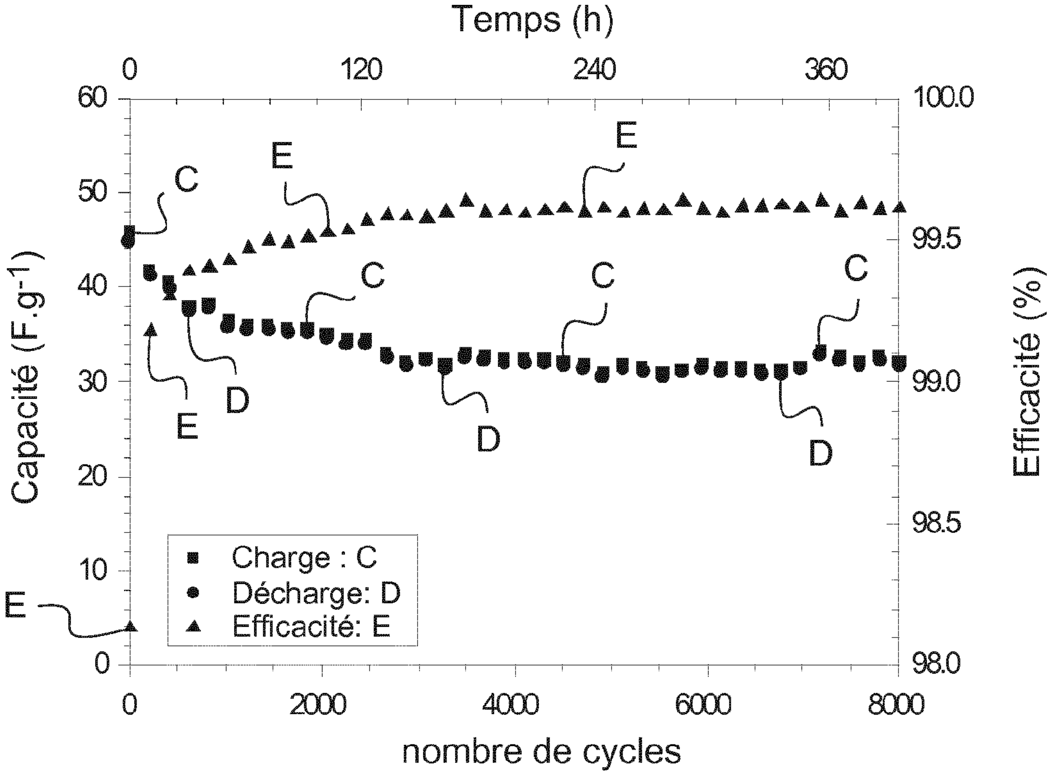
Temps (h)
0
120
240
360
Capacité (F.g-1)
Efficacité (%)
nombre de cycles
0
2000
4000
6000
8000
60
50
40
30
20
10
0
100.0
99.5
99.0
98.5
98.0
C
D
E
Charge : C
Décharge: D
Efficacité: E

Fig.4

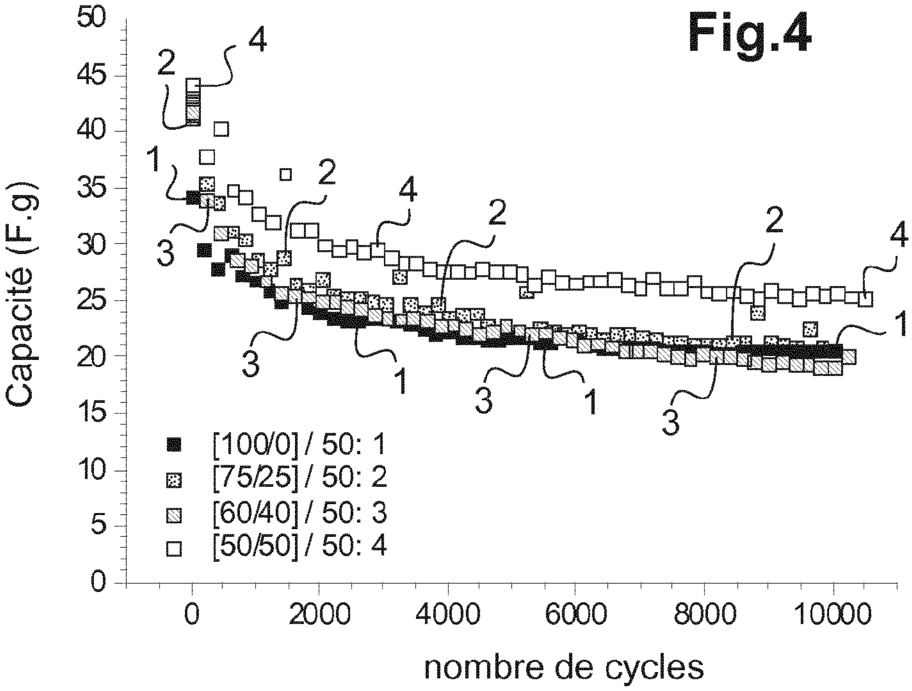
Capacité (F.g)
nombre de cycles
50
45
40
35
30
25
20
15
10
5
0
0
2000
4000
6000
8000
10000
1
2
3
4
[100/0] / 50: 1
[75/25] / 50: 2
[60/40] / 50: 3
[50/50] / 50: 4

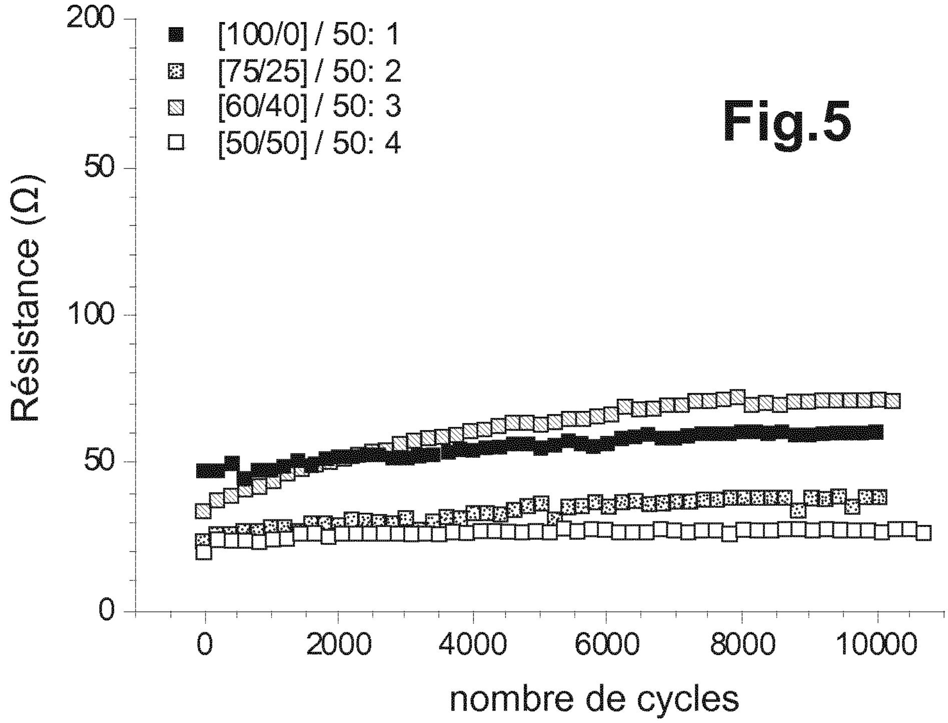

200
50
100
50
0
[100/0] / 50: 1
[75/25] / 50: 2
[60/40] / 50: 3
[50/50] / 50: 4
Résistance (Ω)
0
2000
4000
6000
8000
10000
nombre de cycles


Fig.5

Fig.6

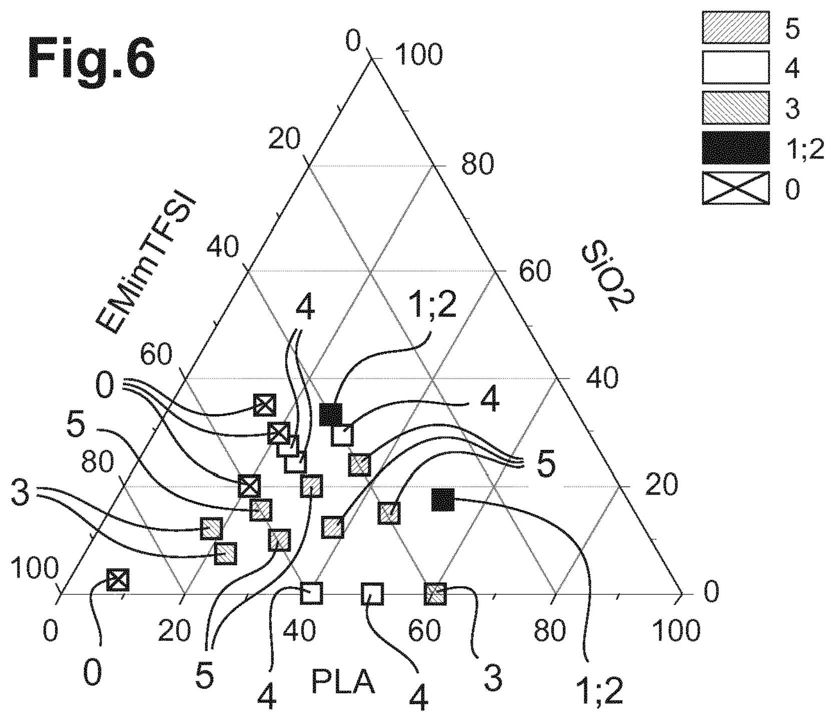

EMimTFSI
SiO2
PLA
5
4
3
1;2
0

Fig.7

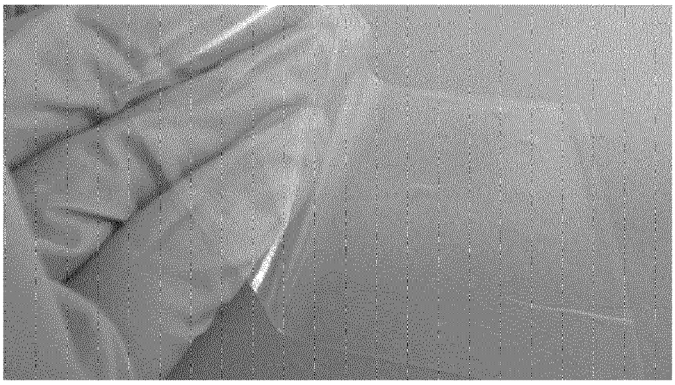

Fig.8

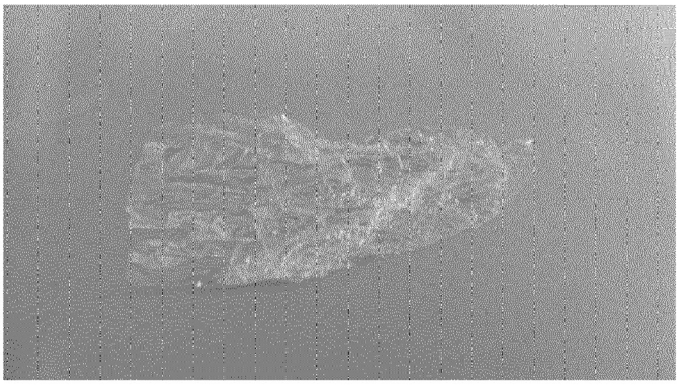

Fig.9

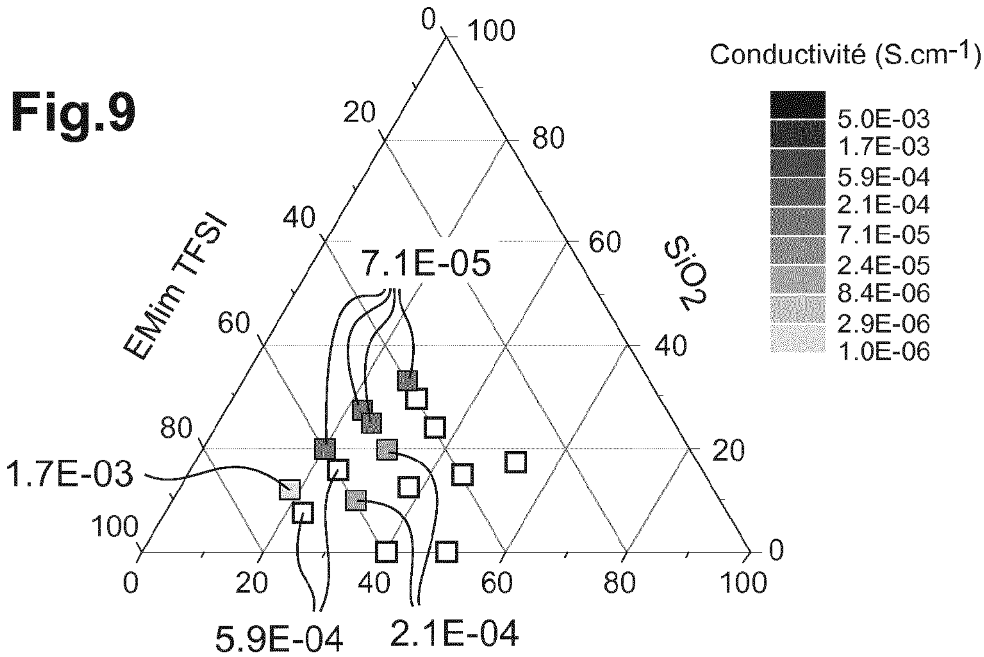

Europäisches Patentamt
European Patent Office
Office européen des brevets

# RAPPORT DE RECHERCHE EUROPEENNE

Numéro de la demande
EP 16 19 7153

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | FR 2 857 004 A1 (CENTRE NAT RECH SCIENT [FR]; UNIV MONTPELLIER II [FR]; UNIV BLAISE PAS) 7 janvier 2005 (2005-01-07)<br>* page 1, lignes 24-26; revendications *<br>* page 2, lignes 3-32 *<br>* page 7, lignes 1-23 *<br>----- | 1-18 | INV.<br>C08J3/11<br>B01J13/00<br>C08K3/34<br>H01B1/12<br>H01M8/1072<br>H01M10/0565 |
| Y,D | DATABASE WPI<br>Week 201425<br>2011<br>Thomson Scientific, London, GB;<br>AN 2013-U86122<br>XP002759336,<br>& CN 103 254 461 A (UNIV DONGHUA) 21 août 2013 (2013-08-21)<br>* abrégé *<br>----- | 1-18 | |
| Y | WANG, H., SHU, L. AND JIANG, S: "Preparation of poly(lactic acid)/poly(methyl methacrylate)/silicon dioxide degradable hybrid electrolytes", J. APPL. POLYM. SCI.,<br>vol. 117, 2010, pages 2790-2794, XP002759337,<br>DOI: 10.1002/app.31935<br>* Introduction, Experimental, Results and Discussion *<br>----- | 1-18 | DOMAINES TECHNIQUES RECHERCHES (IPC)<br>C08J<br>B01J<br>C08K<br>H01B<br>H01M |

Le présent rapport a été établi pour toutes les revendications

1

| Lieu de la recherche | Date d'achèvement de la recherche | Examinateur |
|---|---|---|
| Munich | 7 mars 2017 | Frison, Céline |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO. EP 16 19 7153

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-03-2017

| Document brevet cité au rapport de recherche | Date de publication | Membre(s) de la famille de brevet(s) | Date de publication |
|---|---|---|---|
| FR 2857004 A1 | 07-01-2005 | AT 493475 T | 15-01-2011 |
| | | EP 1641882 A1 | 05-04-2006 |
| | | ES 2358672 T3 | 12-05-2011 |
| | | FR 2857004 A1 | 07-01-2005 |
| | | US 2007007137 A1 | 11-01-2007 |
| | | WO 2005007746 A1 | 27-01-2005 |
| CN 103254461 A | 21-08-2013 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2005007746 A1
- WO 20101092258 A1
- CN 103254461 B
- FR 2857004 A